# EUROPEAN PATENT APPLICATION

(11) **EP 4 843 656 A1**
(43) Date of publication of application: **25.11.2026**
(21) Application number: 24918450.8
(22) Date of filing: 26.12.2024
(51) Int. Cl.: B01D 53/04, B01D 53/14, C01B 32/50

(54) **ATMOSPHERIC CARBON DIOXIDE SEPARATION AND RECOVERY EQUIPMENT**

(30) Priority: 19.01.2024 JP 2024006613
(71) Applicant: KAWASAKI JUKOGYO KABUSHIKI KAISHA, Kobe-shi, Hyogo 650-8670 (JP)
(72) Inventor: MANABE, Satoshi, Hyogo 650-8670 (JP); NARIAI, Toshifumi, Hyogo 650-8670 (JP); OKUMURA, Takeshi, Hyogo 650-8670 (JP); NISHIBE, Shohei, Hyogo 650-8670 (JP)
(74) Representative: Leinweber & Zimmermann
(86) International application number: PCT/JP2024/046283
(87) International publication number: WO 2025/154540

(57) **Abstract**

An atmospheric carbon dioxide separation and capture facility according to one aspect of the present disclosure includes: adsorption towers each of which performs an adsorption treatment in which carbon dioxide contained in atmospheric air is adsorbed onto particulate adsorbent accommodated in the adsorption tower by bringing the atmospheric air into contact with the adsorbent; and a regeneration tower that performs a regeneration treatment in which the carbon dioxide is desorbed from the adsorbent by bringing steam into contact with the particulate adsorbent accommodated in the regeneration tower. Each of the adsorption towers receives the adsorbent subjected to the regeneration treatment in the regeneration tower, and performs the adsorption treatment using the received adsorbent. The regeneration tower receives the adsorbent used for the adsorption treatment in the adsorption towers, and performs the regeneration treatment with respect to the received adsorbent.

## Description

### Technical Field

The present disclosure relates to an atmospheric carbon dioxide separation and capture facility that separates and captures carbon dioxide from atmospheric air.

### Background Art

PTL 1 below discloses a technology in which carbon dioxide in air is adsorbed onto particulate adsorbent and a technology in which carbon dioxide is separated, using steam, from the adsorbent onto which carbon dioxide has been adsorbed.

### Citation List

### Patent Literature

PTL 1: Japanese Laid-Open Patent Application Publication No. 2022-20723

### Summary of Invention

### Technical Problem

In an atmospheric carbon dioxide separation and capture facility, when performing an adsorption treatment with respect to atmospheric air using particulate adsorbent, increasing the volume of an adsorption tower may be considered in order to improve efficiency. However, when the adsorption tower having a large volume is filled with a large amount of adsorbent, it is difficult for the atmospheric air to flow through gaps of the adsorbent, and this may rather reduce the efficiency of the adsorption treatment.

An object of the present disclosure is to provide an atmospheric carbon dioxide separation and capture facility capable of performing an efficient adsorption treatment when particulate adsorbent is used.

### Solution to Problem

An atmospheric carbon dioxide separation and capture facility according to one aspect of the present disclosure includes: adsorption towers each of which performs an adsorption treatment in which carbon dioxide contained in atmospheric air is adsorbed onto particulate adsorbent accommodated in the adsorption tower by bringing the atmospheric air into contact with the adsorbent; and a regeneration tower that performs a regeneration treatment in which the carbon dioxide is desorbed from the adsorbent by bringing steam into contact with the particulate adsorbent accommodated in the regeneration tower. Each of the adsorption towers receives the adsorbent subjected to the regeneration treatment in the regeneration tower, and performs the adsorption treatment using the received adsorbent. The regeneration tower receives the adsorbent used for the adsorption treatment in the adsorption towers, and performs the regeneration treatment with respect to the received adsorbent.

### Advantageous Effects of Invention

This configuration can provide the atmospheric carbon dioxide separation and capture facility capable of performing the efficient adsorption treatment when the particulate adsorbent is used.

### Brief Description of Drawings

FIG. 1 is a schematic diagram of an atmospheric carbon dioxide separation and capture facility according to Embodiment 1, as viewed from the front.
FIG. 2 is a schematic diagram of the atmospheric carbon dioxide separation and capture facility according to Embodiment 1, as viewed from the rear.
FIG. 3 is a schematic diagram of the atmospheric carbon dioxide separation and capture facility according to Embodiment 2, as viewed from the front.
FIG. 4 is a schematic diagram of the atmospheric carbon dioxide separation and capture facility according to Embodiment 3, as viewed from the front.

### Description of Embodiments

### Embodiment 1

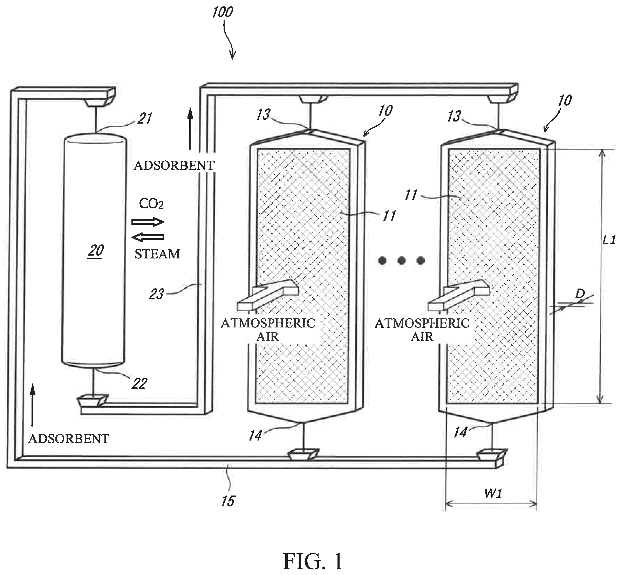

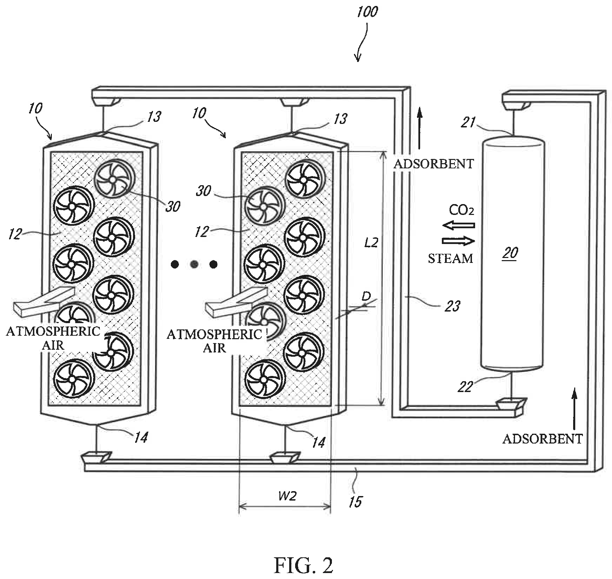

Hereinafter, embodiments will be described. First, a carbon dioxide separation and capture facility (hereinafter referred to as a "separation and capture facility") 100 according to Embodiment 1 will be described. FIG. 1 is a schematic diagram of the separation and capture facility 100 according to Embodiment 1, as viewed from the front. Moreover, FIG. 2 is a schematic diagram of the separation and capture facility 100 according to Embodiment 1, as viewed from the rear.

The separation and capture facility 100 is a facility that separates and captures carbon dioxide from atmospheric air. To be specific, the separation and capture facility 100 is a Direct Air Capture (DAC) facility. The separation and capture facility 100 includes adsorption towers 10, a regeneration tower 20, and suction structures 30. Hereinafter, these components will be described in order.

### Adsorption Tower

Each of the adsorption towers 10 is a chamber in which an adsorption treatment for causing adsorbent to adsorb carbon dioxide contained in atmospheric air. The adsorbent to be used for the adsorption treatment is the adsorbent subjected to a regeneration treatment in the below-described regeneration tower 20. Each of the adsorption towers 10 receives the adsorbent subjected to the regeneration treatment in the regeneration tower 20, and performs the adsorption treatment using the received adsorbent. The adsorbent of the present embodiment is particulate adsorbent, and adsorbent in which a porous carrier is impregnated with an amine is used. However, the adsorbent is not limited to this.

The separation and capture facility 100 according to the present embodiment includes the adsorption towers 10. The number of adsorption towers 10 included in the separation and capture facility 100 is not limited. The adsorption towers 10 are the same in configuration and volume as each other. The atmospheric air comes into contact with the adsorbent by passing through the inside of the adsorption tower 10 accommodating the adsorbent. Thus, carbon dioxide in the atmospheric air is adsorbed onto the adsorbent and captured.

The adsorption tower 10 of the present embodiment has a plate shape perpendicular to a horizontal direction. The adsorption tower 10 includes: an inflow surface 11 that is one of main surfaces as shown in FIG. 1; and an outflow surface 12 that is the other main surface as shown in FIG. 2. The inflow surface 11 and the outflow surface 12 are, for example, mesh members and allow the atmospheric air to pass therethrough. As shown in FIG. 1, the atmospheric air flows from the outside of the adsorption tower 10 through the inflow surface 11 to the inside of the adsorption tower 10. Moreover, as shown in FIG. 2, the atmospheric air that has flown to the inside of the adsorption tower 10 passes through gaps of the adsorbent and flows to the outside of the adsorption tower 10 through the outflow surface 12. In the present embodiment, the inflow surface 11 and the outflow surface 12 are parallel to each other.

Herein, a distance from the inflow surface 11 to the outflow surface 12 is referred to as a "travel distance D." Dimensions of the inflow surface 11 and the outflow surface 12 in a longitudinal direction are referred to as a "vertical dimension L1" and a "vertical dimension L2," respectively. Dimensions of the inflow surface 11 and the outflow surface 12 in a direction perpendicular to the longitudinal direction are referred to as a "width dimension W1" and a "width dimension W2," respectively. In this case, the travel distance D is shorter than each of the vertical dimension L1 and the width dimension W1 of the inflow surface 11 and also shorter than each of the vertical dimension L2 and the width dimension W2 of the outflow surface 12. According to this configuration, a movement distance of the atmospheric air in the adsorption tower 10 is shortened while securing the volume of the adsorption tower 10 at a certain level or more. Thus, the pressure loss of the atmospheric air can be reduced.

Moreover, the vertical dimension L1 of the inflow surface 11 is larger than the width dimension W1 of the inflow surface 11, and the vertical dimension L2 of the outflow surface 12 is larger than the width dimension W2 of the outflow surface 12. In the present embodiment, the inflow surface 11 and the outflow surface 12 extend in an upper-lower direction. Therefore, the vertical dimension L1 of the inflow surface 11 and the vertical dimension L2 of the outflow surface 12 coincide with the height of the inflow surface 11 and the height of the outflow surface 12, respectively. Moreover, the width dimension W1 of the inflow surface 11 and the width dimension W2 of the outflow surface 12 coincide with the horizontal width of the inflow surface 11 and the horizontal width of the outflow surface 12, respectively.

However, when the inflow surface 11 and the outflow surface 12 are inclined relative to a vertical direction, or when each of the inflow surface 11 and the outflow surface 12 has a horizontally elongated shape, the vertical dimension L1 of the inflow surface 11 and the vertical dimension L2 of the outflow surface 12 do not necessarily coincide with the height of the inflow surface 11 and the height of the outflow surface 12, respectively, and the width dimension W1 of the inflow surface 11 and the width dimension W2 of the outflow surface 12 do not necessarily coincide with the horizontal width of the inflow surface 11 and the horizontal width of the outflow surface 12, respectively.

The vertical dimension L1 of the inflow surface 11 may be the same as or different from the vertical dimension L2 of the outflow surface 12. Similarly, the width dimension W1 of the inflow surface 11 may be the same as or different from the width dimension W2 of the outflow surface 12. Moreover, each of the inflow surface 11 and the outflow surface 12 in the present embodiment has a rectangular shape. However, each of the inflow surface 11 and the outflow surface 12 may have a shape other than the rectangular shape. Furthermore, the inflow surface 11 and the outflow surface 12 may have different shapes from each other.

The adsorbent in the adsorption tower 10 is sequentially exchanged. The adsorption tower 10 includes: a supply port 13 which receives the adsorbent; and a discharge port 14 from which the adsorbent is discharged. In the present embodiment, the supply port 13 is located at an upper end portion of the adsorption tower 10, and the discharge port 14 is located at a lower end portion of the adsorption tower 10. The adsorbent discharged from the adsorption tower 10 is transported and supplied to the regeneration tower 20 by a first transporter 15. The first transporter 15 is, for example, a bucket conveyor, a pneumatic conveyor, or the like.

Moreover, the adsorption towers 10 are lined up in parallel and are connected in parallel. Since the adsorption towers 10 are connected in parallel, the adsorbent discharged from one of the adsorption towers 10 does not directly flow into the other adsorption tower 10. In the present embodiment, the separation and capture facility 100 includes the adsorption towers 10. Therefore, even when the adsorption treatment is performed using a large amount of adsorbent, the adsorption treatment is performed by distributing the adsorbent among the adsorption towers 10. Thus, the amount of adsorbent accommodated in each adsorption tower 10 can be suppressed, and the adsorption treatment can be efficiently performed.

### Regeneration Tower

The regeneration tower 20 is a chamber in which the regeneration treatment for desorbing carbon dioxide from the adsorbent is performed. The adsorbent to be subjected to the regeneration treatment is the adsorbent used for the adsorption treatment in the adsorption tower 10. The regeneration tower 20 receives the adsorbent used for the adsorption treatment in the adsorption tower 10, and performs the regeneration treatment by bringing steam into contact with the received adsorbent. The regeneration tower 20 of the present embodiment is a sealable container. In the regeneration treatment of the present embodiment, since pressure inside the regeneration tower 20 is set to negative pressure, the regeneration tower 20 is formed so as to be able to withstand the negative pressure.

The regeneration tower 20 includes: a supply port 21 which receives the adsorbent; and a discharge port 22 from which the adsorbent is discharged. In the present embodiment, the supply port 21 is located at an upper end portion of the regeneration tower 20, and the discharge port 22 is located at a lower end portion of the regeneration tower 20. The adsorbent subjected to the regeneration treatment is discharged from the discharge port 22 of the regeneration tower 20. The adsorbent discharged from the regeneration tower 20 is transported and supplied to the adsorption tower 10 by a second transporter 23. The second transporter 23 is, for example, a bucket conveyor, a pneumatic conveyor, or the like.

The regeneration tower 20 of the present embodiment is located on a lateral side of the adsorption towers 10. Specifically, the supply port 21 of the regeneration tower 20 is not located below the discharge ports 14 of the adsorption towers 10, and the discharge port 22 of the regeneration tower 20 is not located above the supply ports 13 of the adsorption towers 10. To be specific, the adsorption towers 10 and the regeneration tower 20 are lined up in the horizontal direction and not lined up in the upper-lower direction. Therefore, the height of the separation and capture facility 100 can be suppressed.

The volume of the regeneration tower 20 of the present embodiment is equal to the volume of each adsorption tower 10. Therefore, the amount of adsorbent that can be subjected to the regeneration treatment in the regeneration tower 20 at one time is the same as the amount of adsorbent accommodated in each adsorption tower 10. However, the volume of the regeneration tower 20 may be larger than that of each adsorption tower 10. Moreover, a total volume that is the total of the volumes of all of the adsorption towers 10 is larger than the volume of the regeneration tower 20.

### Suction Structures

The suction structures 30 are devices that suck the atmospheric air from the inside of the adsorption tower 10. As shown in FIG. 2, the suction structures 30 are located outside the adsorption tower 10 and close to the outflow surface 12. The suction structures 30 of the present embodiment are, for example, fans. However, the suction structures 30 are not limited to these. For example, the suction structure 30 may be a pipe that is connected to a negative-pressure tank or a negative-pressure chimney. Instead of the suction structures 30, the separation and capture facility 100 may include an air blower, such as a fan, which supplies the atmospheric air to the inflow surface 11 of the adsorption tower 10.

The suction structures 30 suck the atmospheric air from the inside of the adsorption tower 10 through the outflow surface 12 of the adsorption tower 10, and therefore, the atmospheric air flows to the inside of the adsorption tower 10 from the outside of the adsorption tower 10 through the inflow surface 11. As above, in the present embodiment, instead of using the air blower that supplies the atmospheric air toward the inflow surface 11 of the adsorption tower 10, the suction structures 30 are used to cause the atmospheric air to flow to the inside of the adsorption tower 10.

Therefore, according to the present embodiment, the atmospheric air flowing into the adsorption tower 10 can be prevented from increasing in temperature due to passing through the air blower. The adsorbent adsorbs carbon dioxide more readily at low temperatures. In the present embodiment, since the atmospheric air that is relatively low in temperature flows into the adsorption tower 10, the temperature rise of the adsorbent due to the atmospheric air is suppressed, and the adsorption treatment can be efficiently performed.

### Operations of Separation and Capture Facility

Next, operations of the separation and capture facility 100 will be described. Herein, for ease of explanation, the separation and capture facility 100 includes two adsorption towers 10 and one regeneration tower 20. Moreover, an adsorption treatment time is twice a regeneration treatment time. Specifically, the adsorption treatment time is two hours, and the regeneration treatment time is one hour. Herein, the "adsorption treatment time" denotes a time during which the adsorption treatment is performed using the adsorbent from when the adsorption tower 10 receives the adsorbent until the adsorption tower 10 discharges the adsorbent. Moreover, the "regeneration treatment time" denotes a time during which the regeneration treatment is performed with respect to the adsorbent from when the regeneration tower 20 receives the adsorbent until the regeneration tower 20 discharges the adsorbent.

First, the separation and capture facility 100 simultaneously performs the adsorption treatment and the regeneration treatment. The adsorption treatment is performed in each of the two adsorption towers 10. Specifically, in a state where both of the adsorption towers 10 store the adsorbent, the suction structures 30 corresponding to these adsorption towers 10 are driven. Thus, the atmospheric air flows into both of the adsorption towers 10 and passes through the insides of the adsorption towers 10, and carbon dioxide in the atmospheric air is adsorbed onto and captured by the adsorbent.

On the other hand, in the regeneration treatment, in a state where the regeneration tower 20 accommodates the adsorbent, the regeneration tower 20 is sealed. Then, pressure inside the regeneration tower 20 is set to negative pressure, and low-temperature steam is supplied to the regeneration tower 20. Thus, carbon dioxide is desorbed from the adsorbent, and this regenerates the adsorbent. At this time, the regeneration tower 20 may be heated or kept warm.

Next, when the regeneration treatment is completed after being performed for one hour, the suction structures 30 corresponding to one of the two adsorption towers 10 are stopped, and the adsorption treatment in this adsorption tower 10 is completed. At this time, the adsorption treatment in the other of the two adsorption towers 10 continues.

The adsorption tower 10 in which the adsorption treatment has been completed discharges all of the adsorbent used for the adsorption treatment, and the discharged adsorbent is supplied to the regeneration tower 20 by the first transporter 15. Simultaneously with this, the regeneration tower 20 discharges all of the adsorbent subjected to the regeneration treatment, and the discharged adsorbent is supplied by the second transporter 23 to the adsorption tower 10 in which the adsorption treatment has been completed. To be specific, the adsorbent is exchanged between the regeneration tower 20 and the adsorption tower 10 in which the adsorption treatment has been completed.

Next, the regeneration treatment is resumed in the regeneration tower 20, and the adsorption treatment is resumed in the adsorption tower 10 in which the adsorbent has been exchanged. The regeneration tower 20 performs the regeneration treatment at one time with respect to the adsorbent discharged from the adsorption tower 10. Thereafter, when the regeneration treatment is completed after being performed for one hour, the adsorbent is exchanged between the regeneration tower 20 and the adsorption tower 10 different from the adsorption tower 10 in which the adsorbent has been exchanged. After the adsorbent is exchanged, the regeneration treatment is resumed in the regeneration tower 20, and the adsorption treatment is resumed in the adsorption tower 10 in which the adsorbent has been exchanged.

As above, the two adsorption towers 10 discharge the adsorbent at different timings and alternately perform the exchange of the adsorbent every hour. Thus, the adsorbent in the regeneration tower 20 is exchanged every hour, and the adsorbent in each adsorption tower 10 is exchanged every two hours. By repeating the above cycle, the adsorption treatment and the regeneration treatment can be continuously performed even when the adsorption treatment time (two hours in the above example) and the regeneration treatment time (one hour in the above example) are different.

In the above description, the adsorption treatment time is twice the regeneration treatment time. However, the adsorption treatment time may be twice or more the regeneration treatment time. In this case, the number of adsorption towers 10 included in the separation and capture facility 100 may be twice or more the number of regeneration towers 20 included in the separation and capture facility 100. The separation and capture facility 100 according to the present embodiment separates and captures carbon dioxide from atmospheric air, not from exhaust gas. However, the amount of carbon dioxide contained in atmospheric air is significantly smaller than the amount of carbon dioxide contained in exhaust gas. Therefore, the adsorbent can sufficiently adsorb carbon dioxide even when exposed to the atmospheric air for a long period of time. Thus, as in the present embodiment, when the number of adsorption towers 10 is set larger than the number of regeneration towers 20, in other words, when the total volume of the adsorption towers 10 is set larger than the volume of the regeneration tower 20, a longer adsorption treatment time is secured. This allows the performance of the adsorbent to be fully utilized, and consequently, the efficient adsorption treatment can be performed.

Moreover, in the above description, the supply of the adsorbent to the regeneration tower 20 and the supply of the adsorbent to the adsorption tower 10 in which the adsorption treatment has been completed are simultaneously performed. However, when it is difficult to simultaneously perform these, the separation and capture facility 100 may include, for example, three adsorption towers 10. To be specific, the number of adsorption towers 10 included in the separation and capture facility 100 may be three times the number of regeneration towers 20 included in the separation and capture facility 100. According to this configuration, while the regeneration treatment is being performed, the three adsorption towers 10 are sequentially emptied and idled. Thus, the adsorption treatment and the regeneration treatment can be continuously performed.

### Embodiment 2

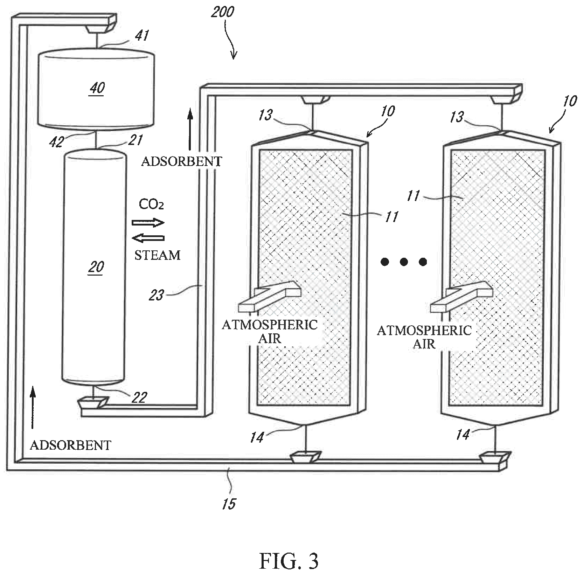

Next, a separation and capture facility 200 according to Embodiment 2 will be described. FIG. 3 is a schematic diagram of the separation and capture facility 200 according to Embodiment 2, as viewed from the front. The separation and capture facility 200 according to Embodiment 2 is different from the separation and capture facility 100 according to Embodiment 1 in that the separation and capture facility 200 includes a regeneration standby tower 40. Except for this, the separation and capture facility 200 according to Embodiment 2 has the same configuration as the separation and capture facility 100 according to Embodiment 1.

The regeneration standby tower 40 is a chamber that receives and temporarily accommodates the adsorbent discharged from the adsorption towers 10. When the adsorbent accommodated in the regeneration standby tower 40 is discharged, the adsorbent is transported to the regeneration tower 20. The regeneration standby tower 40 includes a supply port 41 which receives the adsorbent; and a discharge port 42 from which the adsorbent is discharged. In the present embodiment, the supply port 41 is located at an upper end portion of the regeneration standby tower 40, and the discharge port 42 is located at a lower end portion of the regeneration standby tower 40.

The regeneration standby tower 40 is located downstream of the discharge ports 14 of the adsorption towers 10 and upstream of the supply port 21 of the regeneration tower 20 in the flow direction of the adsorbent. In the present embodiment, the regeneration standby tower 40 is located above the regeneration tower 20. However, the position of the regeneration standby tower 40 is not limited. For example, the regeneration standby tower 40 may be located on the first transporter 15. Moreover, the volume of the regeneration standby tower 40 of the present embodiment is the same as that of each adsorption tower 10. However, the volume of the regeneration standby tower 40 may be larger than that of each adsorption tower 10.

In the separation and capture facility 200 according to the present embodiment, when exchanging the adsorbent, first, the adsorption tower 10 to be subjected to the exchange of the adsorbent discharges all of the adsorbent accommodated therein, and the regeneration standby tower 40 temporarily accommodates the adsorbent discharged from the adsorption tower 10. Next, the regeneration tower 20 discharges the adsorbent accommodated therein, and the adsorption tower 10 to be subjected to the exchange of the adsorbent receives the adsorbent discharged from the regeneration tower 20. Thus, the empty adsorption tower 10 is filled with the adsorbent. Thereafter, the regeneration standby tower 40 discharges the adsorbent temporarily accommodated therein, and the regeneration tower 20 receives the adsorbent discharged from the regeneration standby tower 40. Thus, the empty regeneration tower 20 is filled with the adsorbent. As above, the exchange of the adsorbent is completed.

As above, according to the present embodiment, a time lag occurs between the completion of the discharge of the adsorbent from the adsorption tower 10 and the reception of the adsorbent by the adsorption tower 10. Therefore, the supply of the adsorbent to the adsorption tower 10 and the discharge of the adsorbent from the adsorption tower 10 are not performed simultaneously, and thus, the adsorbent after the regeneration treatment and the adsorbent before the regeneration treatment can be prevented from being mixed with each other. Furthermore, it is not necessary to take measures for creating the above-described time lag, such as stopping of the operation of at least one of the adsorption towers 10 while the regeneration treatment is being performed. Therefore, according to the present embodiment, the adsorption treatment can be efficiently performed.

### Embodiment 3

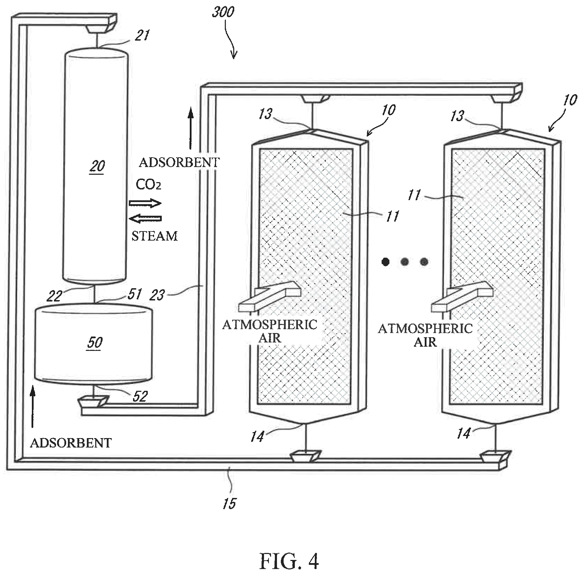

Next, a separation and capture facility 300 according to Embodiment 3 will be described. FIG. 4 is a schematic diagram of the separation and capture facility 300 according to Embodiment 3, as viewed from the front. The separation and capture facility 300 according to Embodiment 3 is different from the separation and capture facility 100 according to Embodiment 1 in that the separation and capture facility 300 includes an adsorption standby tower 50. Except for this, the separation and capture facility 300 according to Embodiment 3 has the same configuration as the separation and capture facility 100 according to Embodiment 1.

The adsorption standby tower 50 is a chamber that receives and temporarily accommodates the adsorbent discharged from the regeneration tower 20. When the adsorbent accommodated in the adsorption standby tower 50 is discharged, the adsorbent is transported to each adsorption tower 10. The adsorption standby tower 50 includes: a supply port 51 which receives the adsorbent; and a discharge port 52 from which the adsorbent is discharged. In the present embodiment, the supply port 51 is located at an upper end portion of the adsorption standby tower 50, and the discharge port 52 is located at a lower end portion of the adsorption standby tower 50.

The adsorption standby tower 50 is located downstream of the discharge port 22 of the regeneration tower 20 and upstream of the supply ports 13 of the adsorption towers 10 in the flow direction of the adsorbent. In the present embodiment, the adsorption standby tower 50 is located below the regeneration tower 20. However, the position of the adsorption standby tower 50 is not limited. For example, the adsorption standby tower 50 may be located on the second transporter 23. Moreover, the volume of the adsorption standby tower 50 of the present embodiment is the same as that of the regeneration tower 20. However, the volume of the adsorption standby tower 50 may be larger than that of the regeneration tower 20.

In the separation and capture facility 300 according to the present embodiment, when exchanging the adsorbent, first, the regeneration tower 20 discharges the adsorbent, and the adsorption standby tower 50 temporarily accommodates the adsorbent discharged from the regeneration tower 20. Next, the adsorption tower 10 to be subjected to the exchange of the adsorbent discharges all of the adsorbent accommodated therein, and the regeneration tower 20 receives the adsorbent discharged from the adsorption tower 10. Thus, the empty regeneration tower 20 is filled with the adsorbent. Thereafter, the adsorption standby tower 50 discharges the adsorbent temporarily accommodated therein, and the adsorption tower 10 to be subjected to the exchange of the adsorbent receives the adsorbent discharged from the adsorption standby tower 50. Thus, the empty adsorption tower 10 is filled with the adsorbent. As above, the exchange of the adsorbent is completed.

As above, according to the present embodiment, as with Embodiment 2, a time lag occurs between the completion of the discharge of the adsorbent from the adsorption tower 10 and the reception of the adsorbent by the adsorption tower 10. Therefore, the supply of the adsorbent to the adsorption tower 10 and the discharge of the adsorbent from the adsorption tower 10 are not performed simultaneously, and the adsorbent after the regeneration treatment and the adsorbent before the regeneration treatment can be prevented from being mixed with each other. Furthermore, it is not necessary to take measures for creating the above-described time lag, such as stopping of the operation of at least one of the adsorption towers 10 while the regeneration treatment is being performed. Therefore, according to the present embodiment, the adsorption treatment can be efficiently performed.

### Conclusion

A first aspect disclosed in the present specification is an atmospheric carbon dioxide separation and capture facility including: adsorption towers each of which performs an adsorption treatment in which carbon dioxide contained in atmospheric air is adsorbed onto particulate adsorbent accommodated in the adsorption tower by bringing the atmospheric air into contact with the adsorbent; and a regeneration tower that performs a regeneration treatment in which the carbon dioxide is desorbed from the adsorbent by bringing steam into contact with the particulate adsorbent accommodated in the regeneration tower, wherein: each of the adsorption towers receives the adsorbent subjected to the regeneration treatment in the regeneration tower, and performs the adsorption treatment using the received adsorbent; and the regeneration tower receives the adsorbent used for the adsorption treatment in the adsorption towers, and performs the regeneration treatment with respect to the received adsorbent.

According to this configuration, the atmospheric carbon dioxide separation and capture facility includes the adsorption towers. Therefore, the amount of adsorbent accommodated in each adsorption tower can be suppressed. As a result, the efficient adsorption treatment can be performed.

A second aspect disclosed in the present specification is the atmospheric carbon dioxide separation and capture facility according to the first aspect, wherein a total of volumes of the adsorption towers is larger than a volume of the regeneration tower.

The atmospheric carbon dioxide separation and capture facility performs the adsorption treatment with respect to the atmospheric air, not the exhaust gas. According to the above configuration, by securing the long adsorption treatment time, the performance of the adsorbent can be fully utilized, and the efficient adsorption treatment can be performed.

A third aspect disclosed in the present specification is the atmospheric carbon dioxide separation and capture facility according to the second aspect, wherein: the adsorption towers are connected in parallel; after the adsorption treatment, the adsorption towers discharge all of the adsorbent accommodated therein at different timings; and the regeneration tower performs the regeneration treatment at one time with respect to the adsorbent whose amount is the same as the amount of adsorbent discharged from each of the adsorption towers which discharge the adsorbent at different timings.

According to this configuration, the adsorption treatment and the regeneration treatment can be continuously performed.

A fourth aspect disclosed in the present specification is the atmospheric carbon dioxide separation and capture facility according to the third aspect, wherein the regeneration tower is located on a lateral side of the adsorption towers.

According to this configuration, the height of the atmospheric carbon dioxide separation and capture facility can be suppressed.

A fifth aspect disclosed in the present specification is the atmospheric carbon dioxide separation and capture facility according to the third aspect, including a regeneration standby tower that has a volume equal to or larger than the volume of the regeneration tower and temporarily accommodates the adsorbent discharged from each of the adsorption towers.

According to this configuration, the time lag between the completion of the discharge of the adsorbent from the adsorption tower and the start of the supply of the adsorbent to the adsorption tower can be created. As a result, the adsorption treatment can be efficiently performed.

A sixth aspect disclosed in the present specification is the atmospheric carbon dioxide separation and capture facility according to the third aspect, including an adsorption standby tower that has a volume equal to or larger than the volume of each adsorption tower and temporarily accommodates the adsorbent discharged from the regeneration tower.

According to this configuration, the time lag between the completion of the discharge of the adsorbent from the adsorption tower and the start of the supply of the adsorbent to the adsorption tower can be created. As a result, the adsorption treatment can be efficiently performed.

A seventh aspect disclosed in the present specification is the atmospheric carbon dioxide separation and capture facility according to any one of the first to sixth aspects, wherein each of the adsorption towers includes: an inflow surface through which the atmospheric air flows from an outside of the adsorption tower to an inside of the adsorption tower; and an outflow surface through which the atmospheric air flows from the inside of the adsorption tower to the outside of the adsorption tower.

According to this configuration, the adsorption tower can receive a large amount of air through the inflow surface. Therefore, the adsorption treatment can be efficiently performed.

An eighth aspect disclosed in the present specification is the atmospheric carbon dioxide separation and capture facility according to the seventh aspect, including suction structures that are located outside each of the adsorption towers and suck the atmospheric air from the inside of the adsorption tower through the outflow surface to cause the atmospheric air to flow from the outside of the adsorption tower through the inflow surface to the inside of the adsorption tower.

According to this configuration, since the temperature of the atmospheric air flowing into the adsorption tower can be suppressed, the temperature rise of the adsorbent is suppressed, and the adsorption treatment can be efficiently performed.

A ninth aspect disclosed in the present specification is the atmospheric carbon dioxide separation and capture facility according to the seventh or eighth aspect, wherein a distance from the inflow surface to the outflow surface is shorter than each of a vertical dimension and a width dimension of the inflow surface and also shorter than each of a vertical dimension and a width dimension of the outflow surface.

According to this configuration, the movement distance of the atmospheric air in the adsorption tower is shortened while securing the volume of the adsorption tower at a certain level or more. Thus, the pressure loss of the atmospheric air can be reduced.

## Claims

1. An atmospheric carbon dioxide separation and capture facility comprising:
adsorption towers each of which performs an adsorption treatment in which carbon dioxide contained in atmospheric air is adsorbed onto particulate adsorbent accommodated in the adsorption tower by bringing the atmospheric air into contact with the adsorbent; and
a regeneration tower that performs a regeneration treatment in which the carbon dioxide is desorbed from the adsorbent by bringing steam into contact with the particulate adsorbent accommodated in the regeneration tower, wherein:
each of the adsorption towers receives the adsorbent subjected to the regeneration treatment in the regeneration tower, and performs the adsorption treatment using the received adsorbent; and
the regeneration tower receives the adsorbent used for the adsorption treatment in the adsorption towers, and performs the regeneration treatment with respect to the received adsorbent.

2. The atmospheric carbon dioxide separation and capture facility according to claim 1, wherein a total of volumes of the adsorption towers is larger than a volume of the regeneration tower.

3. The atmospheric carbon dioxide separation and capture facility according to claim 2, wherein:
the adsorption towers are connected in parallel;
after the adsorption treatment, the adsorption towers discharge all of the adsorbent accommodated therein at different timings; and
the regeneration tower performs the regeneration treatment at one time with respect to the adsorbent whose amount is the same as the amount of adsorbent discharged from each of the adsorption towers which discharge the adsorbent at different timings.

4. The atmospheric carbon dioxide separation and capture facility according to claim 3, wherein the regeneration tower is located on a lateral side of the adsorption towers.

5. The atmospheric carbon dioxide separation and capture facility according to claim 3, comprising a regeneration standby tower that has a volume equal to or larger than the volume of the regeneration tower and temporarily accommodates the adsorbent discharged from each of the adsorption towers.

6. The atmospheric carbon dioxide separation and capture facility according to claim 3, comprising an adsorption standby tower that has a volume equal to or larger than the volume of each adsorption tower and temporarily accommodates the adsorbent discharged from the regeneration tower.

7. The atmospheric carbon dioxide separation and capture facility according to claim 1, wherein each of the adsorption towers includes:
an inflow surface through which the atmospheric air flows from an outside of the adsorption tower to an inside of the adsorption tower; and
an outflow surface through which the atmospheric air flows from the inside of the adsorption tower to the outside of the adsorption tower.

8. The atmospheric carbon dioxide separation and capture facility according to claim 7, comprising suction structures that are located outside each of the adsorption towers and suck the atmospheric air from the inside of the adsorption tower through the outflow surface to cause the atmospheric air to flow from the outside of the adsorption tower through the inflow surface to the inside of the adsorption tower.

9. The atmospheric carbon dioxide separation and capture facility according to claim 7, wherein a distance from the inflow surface to the outflow surface is shorter than each of a vertical dimension and a width dimension of the inflow surface and also shorter than each of a vertical dimension and a width dimension of the outflow surface.
